(19) Europäisches Patentamt / European Patent Office / Office européen des brevets

(11) **EP 2 428 076 B1**

(12) **EUROPEAN PATENT SPECIFICATION**

(45) Date of publication and mention
of the grant of the patent:
**12.08.2015 Bulletin 2015/33**

(21) Application number: **10772062.5**

(22) Date of filing: **23.03.2010**

(51) Int Cl.:
*H04W 52/28* (2009.01)     *H04W 52/40* (2009.01)
*H04W 52/16* (2009.01)     *H04W 52/14* (2009.01)
*H04W 52/22* (2009.01)     *H04W 52/26* (2009.01)

(86) International application number:
**PCT/FI2010/050219**

(87) International publication number:
**WO 2010/128201 (11.11.2010 Gazette 2010/45)**

(54) **UPLINK COMMUNICATIONS**

UPLINK-ÜBERMITTLUNGEN

COMMUNICATIONS SUR LA LIAISON MONTANTE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.05.2009 US 215341 P**

(43) Date of publication of application:
**14.03.2012 Bulletin 2012/11**

(73) Proprietor: **Nokia Technologies Oy
02610 Espoo (FI)**

(72) Inventors:
• **KURTTI, Markku Tapani**
**FI-90540 Oulu (FI)**
• **BLANKENSTEIN, Janne Ilari**
**FI-90540 Oulu (FI)**
• **HILTUNEN, Antti Olavi**
**FI-90540 Oulu (FI)**
• **RAHIKKALA, Jukka Kalervo**
**FI-90240 Oulu (FI)**

(74) Representative: **Seppo Laine Oy
Itämerenkatu 3 B
00180 Helsinki (FI)**

(56) References cited:
WO-A1-2006/081874     WO-A1-2006/083152
WO-A1-2006/120540     WO-A1-2007/072427
WO-A2-2006/117663     CN-A- 101 060 656
US-A1- 2007 248 099     US-A1- 2008 045 259

• **"3rd Generation Partnership Project; Technical
Specification Group Radio Access Network;
Medium Access Control (MAC) protocol
specification (Release 8)", 3GPP STANDARD;
3GPP TS 25.321, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, no. V8.5.0, 1 March 2009
(2009-03-01), pages 1-180, XP050367725,**

**Description**

TECHNICAL FIELD

The present invention generally relates to communications in an uplink direction. The invention relates particularly, though not exclusively, to high speed uplink packet transmission for mobile terminals.

BACKGROUND ART

Current standard specifications enable not only high speed packet access in a downlink direction, that is, from base station (node B or similar) to terminal, but also in the opposite, uplink direction, that is, from terminal to base station.

High Speed Packet Access (HSPA) is one example collection of high speed packet transmission technologies including a specific High Speed Uplink Packet Access (HSUPA) technology, occasionally also called Enhanced Uplink (EUL). One purpose is to improve the performance of the existing WCDMA (Wideband Code Division Multiple Access) technology standardized by the 3GPP. The maximum uplink speeds achieved by these technologies may be around 5.8 Mbit/s, or 11 Mbit/s, or even more with an evolved high speed packet transmission technology, such as a HSPA+ technology or similar, or with a yet more evolved future technology.

In the connection of high speed uplink packet transmission technologies, the current specifications typically define that the terminals (user equipment, UE or similar) request a permission to send data and the base stations decide when and how many terminals will be allowed to do so. In addition to a scheduled mode of uplink transmission the current specifications typically allow a self-initiated transmission mode from the terminals, denoted non-scheduled.

The feature serving (scheduled) grant (SG) is used to basically define a limit for scheduled data that is allowed to be transmitted in the uplink direction on a dedicated transport channel, such as enhanced dedicated channel (E-DCH) or similar. One way for implementing the serving grant feature is to use a downlink signaling channel for transmitting transmission power commands from the base station(s) to terminals concerning transmission power to be used at the terminal in uplink transmission. This signaling channel may be a physical channel, such as a relative grant channel (E-RGCH) or similar. The power used by the scheduled transmission flows is typically controlled dynamically by the base station through absolute grant (i.e., signaling an actual value) and relative grant commands (i.e., single UP, HOLD or DOWN commands).

Concerning relative grant commands, base stations in practice indicate to the terminal by UP that a terminal can send more (and cause more interference), by HOLD to maintain current data rate and DOWN means that the terminal must tune down the power it uses (due to the fact that there might be too much interference in the cell, for example). Relative grant commands UP or DOWN make the SG to change in relation to data transmitted during preceding transmission period.

The terminal can detect relative grant commands from serving and non-serving links. A serving link is the primary link to be used and a non-serving link can be, for example, a link to a base station in an adjacent cell in a soft handover case where the terminal is in communication with several base stations at a time.

The current specifications concerning different high speed uplink packet transmission technologies do not readily present solutions to all problem situations discovered previously, let alone that new problem situations will be discovered from time to time.

Document CN101060656A discloses a control method for power control on E-DCH comprising that if Serving_Grant=Zero_Grant in current TTI, receiving RG command 'DOWN' from E-DCH non-serving RL, setting Maximum_Serving_Grant as the value at least lower one-class relative to value in scheduling table of reference_ETPR, and setting Non_Serving_RG_Timer to limit value of Serving_Grant not beyond the Maximum_Serving_Grant in preset time, wherein the reference_ETPR is the power ratio of E-DPDCH and DPCCH of TTI in one HARQ process.

Document WO2006/081874 discloses a method for handling unreliable scheduling grants in a WCDMA-communication system. A user equipment detects that a received scheduling grant is unreliable and adjust its serving grant based on that information. The user equipment is also able to report continuously received unreliable grants as an event to the network, allowing the network to adapt its operation to reduce the unreliable grants. The detection relies on reliability detection, not on the existence of a scheduled transmission prior to the reception of a relative grant.

Document US2007/248099 discloses a method to operate a wireless user equipment. The method includes, in response to operation during a Baseline Procedure when no absolute grant (AG) is received from a wireless network node, determining if there was a scheduled transmission in a previous transmission time interval of a hybrid automatic repeat request (HARQ) process and, if there was, using a serving relative grant (SRG) and, if it is determined instead that there was not a scheduled transmission in the previous transmission time interval of the HARQ process, not using the SRG if it is determined that there was a scheduling information (SI) event alone in the previous transmission time interval of the HARQ process. The method is not directed to the reception of a non-serving grant, and as such solves a different problem, i.e. that of receiving scheduling information without scheduling data.

Document XP050367725 represents the latest published 3GPP standard before the relevant date of the application.

If no scheduled transmission took place on a HARQ process in the previous TTI, the reference_ETPR shall be set to Minimum_Grant for this HARQ process.

For a particular TTI, if the UE received a Non-serving Relative Grant "DOWN", it will determine the Serving_Grant as follows:

- Determine the lowest power ratio in the configured SG-table that is equal or higher to the maximum of reference_ETPR2 (which is set to the previously stored reference_ETPR on this HARQ process when the reference_ETPR is updated with a new value) of all active HARQ processes, and determine the corresponding index in the SG-table: $SG_{LUPR2}$;

- Determine the Serving_Grant:

$$\text{Serving\_Grant} = \text{MIN}(\text{Serving\_Grant}, \text{Maximum\_Serving\_Grant}, SG[\text{MAX}(SG_{LUPR2} - 1, 0)]);$$

- Update the Maximum_Serving_Grant with the Serving_Grant;

- start the timer Non_Serving_RG_Timer with the length of one HARQ RTT (40ms in the case of 10ms TTI, 16ms in the case of 2ms TTI), during which the maximum E-DPDCH to DPCCH power ratio that the UE is allowed to use for scheduled data should not exceed the Maximum_Serving_Grant

In the case that the UE is buffer limited, there may no scheduled transmission in the uplink for a long period of time. Some possible examples are when UE is performing FTP downloads (only TCP/IP ACKs uplink) or the UE is performing DTX operation. Hence, it is possible that the reference_ETPR2 of all HARQ processes are of the value of Minimum_Grant. However in case the maximum of reference_ETPR2 of all HARQ processes are of the value of Minimum_Grant, if UE received a Non-serving Relative Grant "DOWN", then the Serving_Grant will be dropped to Minimum_Grant and the scheduled transmission will blocked.

SUMMARY

According to a first example aspect of the invention there is provided a method comprising:

communicating by an apparatus with base stations using a high speed uplink packet transmission technique that provides the apparatus with serving and non-serving links to base stations as well as scheduled transmissions in a serving link; detecting a relative grant command at the apparatus from a non-serving link; and in a situation in which no scheduled transmission took place by the apparatus during preceding transmission period, preventing the detected command from causing the apparatus to start applying a lowest value of a variable or parameter that defines or controls the transmission power or power ratio for scheduled transmission.

Accordingly, it has been observed in accordance with an embodiment of the invention that undesired transmission power downgrading can be prevented if, for example, a downgrading command detected from the non-serving link is interpreted by the apparatus in the mentioned specific situation in the mentioned specific way (that is, by preventing the lowest value of the variable or parameter directly or indirectly defining transmission power to be applied). In that case the apparatus in an embodiment may continue to use the current value of said variable or parameter, or may begin to use another value, lower than the current value but higher than a minimum value.

The above is in contrast to current specifications which typically define that in the mentioned situation the apparatus has to start applying the lowest value. In high speed uplink packet transmission technologies that use a serving (scheduled) grant feature (SG) that defines a limit for scheduled data that is allowed to be transmitted in the uplink direction on an dedicated transport channel, the lowest value may be defined as the SG having the lowest value, typically SG = 0. In an embodiment the lowest value may be defined as a state variable, such as reference_ETPR or reference_ETPR2, having a value indicating minimum grant, such as a value Minimum_Grant.

The relative grant command may be a command that is used to control the data rate or transmission power of uplink transmissions.

In an embodiment, the relative grant command is a relative grant channel command, such as an E-RGCH command. In an embodiment, the relative grant command is a transmission power or data rate downgrading command, such as a DOWN command, or a command to maintain current data rate or transmission power, such as a HOLD command.

In an embodiment, in response to detecting the relative grant command at the apparatus, the use of the current value of variable or parameter that defines or controls the transmission power or power ratio for scheduled transmission is continued by the apparatus. In an embodiment, this can be implemented by continuing to use the value of the parameter or variable that was used during the preceding (or immediately preceding) transmission period.

In an embodiment, the preceding transmission period is a transmission time interval (TTI) corresponding to previous transmission on current hybrid automatic repeat request (HARQ) process. In an embodiment, the preceding transmission period is a set (window) of TTIs comprised of active HARQ processes transmitted one HARQ process round trip time (RTT) ago in the past.

In an embodiment, when the apparatus has more than one active transmission process (i.e., a group of transmission processes, such as HARQ processes), in the situation in which the relative grant command is detected at the apparatus from the non-serving link and in which no scheduled transmission took place by the apparatus during the preceding transmission period, the method comprises preventing the detected command from causing the apparatus to start applying the lowest value of said variable or parameter to the transmission process that had the highest transmission power of the group in the (near) past.

According to a second example aspect of the invention there is provided an apparatus comprising:

a communication unit configured to communicate with base stations using a high speed uplink packet transmission technique that provides the apparatus with serving and non-serving links to base stations as well as scheduled transmissions in a serving link, the communication unit further being configured to detect a relative grant command from a non-serving link; and

a processor configured to prevent, in a situation in which no scheduled transmission took place by the apparatus during preceding transmission period, the detected command from causing the apparatus to start applying a lowest value of a variable or parameter that defines or controls the transmission power or power ratio for scheduled transmission.

According to a third example aspect of the invention there is provided a computer program comprising program code executable in an apparatus, and when executed causing the apparatus to perform the operations of:

communicating with base stations using a high speed uplink packet transmission technique that provides the apparatus with serving and non-serving links to base stations as well as scheduled transmissions in a serving link;

detecting a relative grant command at the apparatus from a non-serving link; and in a situation in which no scheduled transmission took place by the apparatus during preceding transmission period, preventing the detected command from causing the apparatus to start applying a lowest value of a variable or parameter that defines or controls the transmission power or power ratio for scheduled transmission.

According to a fourth example aspect of the invention there is provided a memory medium carrying the computer program of the third example aspect. The memory medium may be a digital data storage such as a data disc or diskette, optical storage, magnetic storage, holographic storage, phase-change storage (PCM) or opto-magnetic storage. The memory medium may be formed into a device without other substantial functions than storing memory or it may be formed as part of a device with other functions, including but not limited to a memory of a computer, a chip set, and a sub assembly of an electronic device.

According to a fifth example aspect of the invention there is provided an apparatus comprising:

means configured to communicate with base stations using a high speed uplink packet transmission technique that provides the apparatus with serving and non-serving links to base stations as well as scheduled transmissions in a serving link,

the means further being configured to detect a relative grant command from a non-serving link; and

means configured to prevent, in a situation in which no scheduled transmission took place by the apparatus during preceding transmission period, the detected command from causing the apparatus to start applying a lowest value of a variable or parameter that defines or controls the transmission power or power ratio for scheduled transmission.

According to a yet another example aspect of the invention there is provided a method comprising:

communicating by an apparatus with base stations using a high speed uplink packet transmission technique that provides the apparatus with serving and non-serving links to base stations as well as scheduled transmissions in a serving link;

detecting a data rate or transmission power downgrading command at the apparatus from a non-serving link; and in a situation in which no scheduled transmission took place by the apparatus during preceding transmission period, preventing the detected downgrading command from causing the apparatus to start applying a lowest value of a variable or parameter that defines or controls the transmission power or power ratio for scheduled transmission in a serving link.

An apparatus, computer program and memory medium carrying the computer program may be similarly provided.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

BRIEF DESCRIPTION OF THE DRAWINGS

The invention will be described, by way of example only, with reference to the accompanying drawings, in which:

Fig. 1     shows a schematic picture of an example system according to an embodiment of the invention;
Fig. 2     shows a flow chart depicting a method according to an embodiment of the invention; and
Fig. 3     shows a block diagram of a terminal of Fig. 1.

DETAILED DESCRIPTION

In the following description, like numbers denote like elements.

As mentioned in the background art section, current standard specifications enable not only high speed packet access in a downlink direction, that is, from base station (node B or similar) to terminal, but also in the opposite, uplink direction, that is, from terminal to base station.

The embodiments of the present invention are suitable to be implemented in systems presented in the background art section. The systems comprise systems taking advantage of high speed uplink packet transmission technologies.

High Speed Packet Access (HSPA) is one example collection of high speed packet transmission technologies including a specific High Speed Uplink Packet Access (HSUPA) technology, occasionally also called Enhanced Uplink (EUL). One of their purposes is to improve the performance of the existing WCDMA (Wideband Code Division Multiple Access) technology standardized by the 3GPP. The maximum uplink speeds achieved by these technologies may be around 5.8 Mbit/s, or 11 Mbit/s, or even more with an evolved high speed packet transmission technology, such as a HSPA+ technology or similar. The embodiments of the invention are applicable also in systems taking advantage of yet more evolved future technologies.

An example system in accordance with an embodiment of the invention is presented in the following. The system may be a HSUPA system or a system generally in line with the HSUPA system. However, embodiments of the invention may typically also be used in other systems employing a high speed uplink packet transmission technology.

In the example system the terminals (user equipment, UE or similar) request a permission to send data and the base stations decide when and how many terminals will be allowed to do so. In addition to a scheduled mode of uplink transmission the example system allows a self-initiated transmission mode from the terminals, denoted non-scheduled.

The feature scheduled grant (SG) is used to basically define a limit for scheduled data that is allowed to be transmitted in the uplink direction on a dedicated transport channel, such as enhanced dedicated channel (E-DCH) or similar. One way for implementing the scheduled grant feature is to use a downlink signaling channel for transmitting transmission power commands from the base station(s) to terminals concerning transmission power to be used at the terminal in uplink transmission. This signaling channel may be a physical channel, such as a relative grant channel (E-RGCH) or similar. The power used by the scheduled transmission flows is typically controlled dynamically by the base station through absolute grant (i.e., signaling an actual value) and relative grant commands (i.e., single UP, HOLD or DOWN commands).

Concerning relative grant commands, base stations in practice indicate to the terminal by UP that a terminal can send more (and cause more interference), by HOLD to maintain current data rate and DOWN means that the terminal must tune down the power it uses (due to the fact that there might be too much interference in the cell, for example).

Relative grant commands (UP or DOWN) are meant to make the SG to change in relation to data transmitted during preceding transmission period.

The terminal can detect relative grant commands from serving and non-serving links. A serving link is the primary link to be used and a non-serving link can be, for example, a link to a base station in an adjacent cell in a soft handover case where the terminal is in communication with several base stations at a time. A detected command may be transmitted by a base station, however a terminal may also erroneously detect a command that was not transmitted from a base station. If a terminal detects a DOWN command when one was not sent, it may downgrade transmissions unnecessarily.

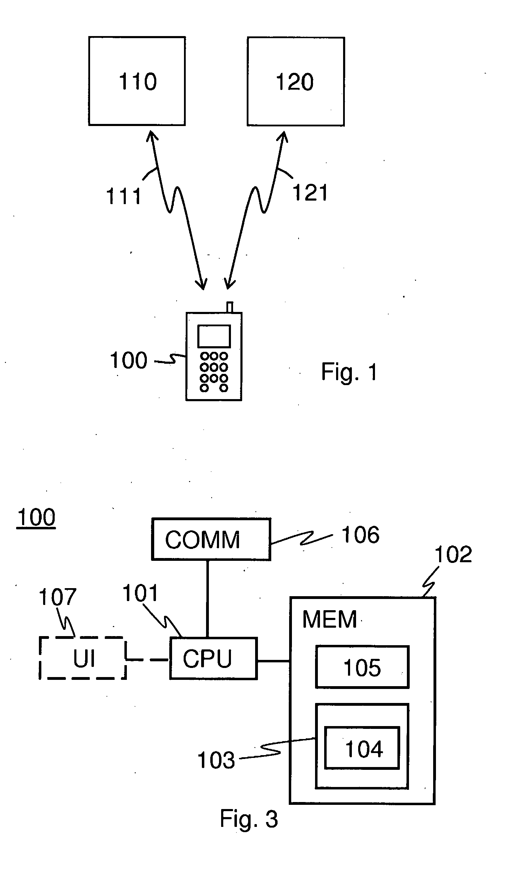

Fig. 1 shows a schematic picture of the example system according to an embodiment of the invention. The terminal 100 communicates simultaneously with two base stations 110 and 120 over a communications link, typically a radio link (RL). The communications link 111 with the base station 110 is a serving link and the communications link 121 with the base station 120 is a non-serving link.

The terminal 100 transmits scheduled data transmission on a dedicated transport channel, such as enhanced dedicated channel (E-DCH) and detects relative grant commands from base stations 110 and 120 on signaling channel(s), such as a relative grant channel (E-RGCH). In an embodiment, a medium access control MAC-d entity handles the (enhanced) dedicated transport channel. The scheduled data transmission may be implemented as a MAC-d flow or similar. This typically represents a QoS flow.

In a specific example embodiment, an E-DCH dedicated physical data channel (E-DPDCH) is used to carry the E-DCH transport channel and an E-DCH dedicated physical control channel (E-DPCCH) is used to carry control information associated with the E-DCH.

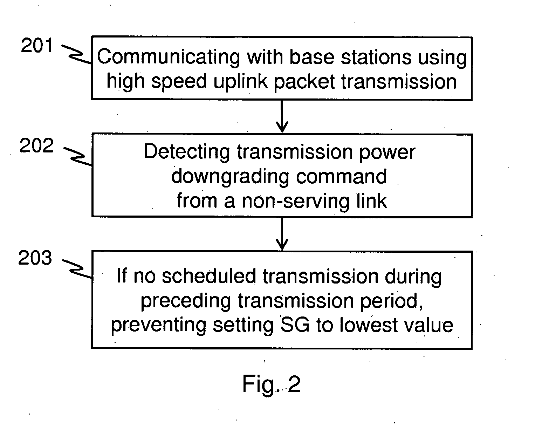

Fig. 2 shows a flow chart depicting a method according to an embodiment of the invention. Step 201 generally defines that the terminal 100 communicates with base stations 110 and 120 using a high speed uplink packet transmission technique. In step 203, if a downgrading command (such as, for example a relative grant DOWN command or in some circumstances HOLD) from a non-serving link has been detected in step 202, and if no scheduled transmission took place during the previous transmission period for scheduled transmission, it is prevented that the serving grant (or scheduled grant) would be set to a lowest value. In this way, undesired downgrading due to detected non-serving relative grant downgrading command can be prevented.

In a specific non-limiting example embodiment concerning a specific existing high speed uplink packet access (HSUPA) example system presented in the following, undesired SG downgrading due to a detected relative grant DOWN command on non-serving E-DCH RL E-RGCH channel is prevented.

Presently, in this system it is allowed on E-RGCH from non-serving E-DCH RL to make a certain number of false (DOWN) detections from noise in certain radio channel conditions. Upon detecting the relative grant DOWN command at the terminal 100 a serving grant update procedure is performed. The serving grant update procedure uses a reference_ETPR or reference_ETPR2 state variable that holds the E-DPDCH to DPCCH power ratio used as reference for relative grant commands. In existing standards the reference_ETPR or reference_ETPR2 is defined to be set to Minimum_Grant in case no scheduled transmission took place on a HARQ process in the previous TTI.

Due to how the serving grant update and handling of relative grants has been defined in existing standards, if (false) DOWN is detected from non-serving E-DCH RL E-RGCH and no scheduled transmission took place on a HARQ process in previous TTI, SG is presently set to Minimum_Grant (usually SG 0). SG 0 may effectively block scheduled E-DCH transmission. Blocked E-DCH impacts HSUPA throughput and functionality.

Accordingly, in accordance with an embodiment of the invention, if a DOWN command on non-serving E-DCH RL E-RGCH is detected at the terminal 100 and no scheduled transmission took place on a HARQ process in the previous TTI (reference_ETPR equals Minimum_Grant) or during any of the active HARQ processes in preceding time window (maximum of all active reference_ETPR2 equals Minimum_Grant), setting SG to Minimum Grant is prevented. In this way undesired SG downgrading can be prevented.

The following description presents different ways to implement preventing of undesired downgrading of scheduled transmissions on a serving link. The presented alternatives are described in the context of high speed uplink packet access (HSUPA) example system although the intention is not to limit only to this technology.

Embodiment alternative A:

In this embodiment, the terminal is forced, for example with controlling by software, to handle non-serving E-RGCH DOWN commands in Serving Grant Update procedure taking the following condition into account:

"If there was a scheduled transmission in the previous TTI of the HARQ process given by the value of CURRENT_HARQ_PROCESS" (concerning existing 3GPP specifications of Release6 and Release7)

"If there was a scheduled transmission in the TTI corresponding to maximum reference_ETPR2" (concerning 3GPP specifications of Release8 and onwards)

And only if this condition is fulfilled should Serving Grant be updated upon detecting non-serving E-RGCH DOWN command.

More generally, the terminal is forced to obey the following rule:

If a power downgrading command is detected over a non-serving link, update serving grant only if there was a scheduled transmission in the preceding transmission period (during the previous TTI of the applied HARQ process or during the time window comprising all active HARQ processes one RTT from the past).

Embodiment alternative B:

In this embodiment, the terminal is forced, for example with controlling by software, to handle the state variable reference_ETPR (and eventually reference_ETPR2) as follows:

In case no scheduled transmission took place on a HARQ process in the previous TTI, reference_ETPR shall be set to current Serving grant.

More generally, the terminal is forced to obey the following rule in the event it detects a downgrading command from the non-serving link:

In case no scheduled transmission took place in the preceding transmission period (or during the previous TTI of the applied HARQ process), a state variable defining a power ratio of a dedicated physical data channel to a dedicated physical control channel shall be set to current serving grant.

Embodiment alternative C:

In this embodiment, a parameter or variable, such as "non-serving grant", is signaled from base station to terminal on each non-serving E-DCH RL. The terminal is configured to receive the parameter or variable. It indicates to the terminal the lowest SG value which can be caused by a DOWN command from the non-serving RL. This floor value prevents SG being lowered too much by the terminal in the event a downgrading command is detected from the non-serving link.

Embodiment alternative D:

In this embodiment the terminal calculates SG corresponding to the minimum configured MAC-layer PDU size and does not allow SG go lower than this limit due to non-serving E-RGCH DOWN commands.

The following presents some existing and non-limiting E-DCH specific definitions:

Serving_Grant (FDD): The state variable Serving_Grant indicates the maximum E-DPDCH to DPCCH power ratio that the UE is allowed to use for scheduled data in the following transmission. The value in the appropriate state variable will be provided to the E-TFC selection function to help in selecting the best format for the upcoming transmission.

Minimum_Grant: The value Minimum_Grant corresponds to the minimum E-DPDCH to DPCCH power ratio that the UE considers. This value is in index 0 of a configured scheduling grant table.

Non-serving E-DCH RL or Non-serving RL: Cell which belongs to the E-DCH active set but does not belong to the Serving E-DCH RLS and from which the UE can receive one Relative Grant. The UE can have zero, one or several Non-serving E-DCH RL(s).

reference_ETPR: The state variable reference_ETPR holds the E-DPDCH to DPCCH power ratio used as reference for relative grant commands. This variable is set to the E-DPDCH to DPCCH power ratio used for the E-TFC selected for the previous TTI on this HARQ process, calculated using the amplitude ratios prior to the quantization, excluding non-scheduled transmissions, excluding any scaling applied and is obtained from the physical layer. In case no scheduled transmission took place on a HARQ process in the previous TTI, reference_ETPR shall be set to Minimum_Grant for this HARQ process.

reference_ETPR2: The state variable reference_ETPR2 holds the E-DPDCH to DPCCH power ratio used as reference for non serving relative grant commands. This variable is set to the previously stored reference_ETPR on this HARQ process when the reference_ETPR is updated with a new value.

Fig. 3 shows a block diagram of a terminal according to an embodiment of the invention. The terminal 100 comprises a memory 102 including a persistent memory 103 configured to store computer program code 104. The terminal 100 further comprises a processor 101 for controlling the operation of the terminal 100 using the computer program code 104, a work memory 105 for running the computer program code 104 by the processor 101, and a communication unit 106 for communicating with the base stations 110 and 120. It also typically comprises a user interface 107 including a display and keypad for operating the terminal 100 by a user. The processor 101 may be a master control unit (MCU). Alternatively, the processor may be a microprocessor, a digital signal processor (DSP), an application specific integrated circuit (ASIC), a field programmable gate array, a microcontroller or a combination of such elements.

As to the operations of the embodiments of the invention, the communication unit 106 is configured to communicate with base stations using a high speed uplink packet transmission technique that provides the terminal apparatus 100 with serving and non-serving links to base stations 110 and 120 as well as scheduled transmissions in a serving link 111. The communication unit 106 is further configured to detect any relative grant (E-RGCH) command from the non-serving link 121. The processor 101 is configured to control the operation of the communication unit 106 in accordance with the computer program code 104. The processor 101 is further configured to prevent, as controlled by the computer program code 104, in a situation in which no scheduled transmission took place by the apparatus during a preceding transmission period, detected downgrading command from causing the apparatus to start applying a lowest value of a variable or parameter that defines the transmission power or power ratio for scheduled transmission in the serving link.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method comprising:

   communicating (201) by an apparatus with base stations using a high speed uplink packet transmission technique that provides the apparatus with serving and non-serving links to base stations as well as scheduled transmissions in a serving link;
   detecting (202) a downgrading relative grant command at the apparatus from a non-serving link; and
   **characterized in that**
   in a situation in which no scheduled transmission took place by the apparatus during an immediately preceding transmission period, the method comprises preventing (203) the detected command from causing the apparatus to start applying a lowest value of a parameter that controls the transmission power or power ratio for scheduled transmission.

2. The method of claim 1, wherein said preventing (203) is performed if a relative grant command DOWN is detected at the apparatus and no scheduled transmission took place on a transmission, HARQ, process in a previous transmission time interval, reference_ETPR equals Minimum_Grant, or during any of the active transmission, HARQ, processes in a preceding time window, maximum of all active reference_ETPR2 equals Minimum_Grant.

3. The method of claim 2, wherein said preventing (203) is performed by preventing Serving_Grant from being set to Minimum_Grant.

4. The method of claim 1, wherein said preventing (203) is performed in a situation in which no scheduled transmission took place by the apparatus during any of the active transmission, HARQ, processes in a preceding time window.

5. The method of claim 1, wherein the relative grant command is a transmission power downgrading command or data rate downgrading command, or a command to maintain current data rate or transmission power.

6. An apparatus comprising:

   means (106) configured to communicate with base stations using a high speed uplink packet transmission technique that provides the apparatus with serving and non-serving links to base stations as well as scheduled transmissions in a serving link, the means further being configured to detect a downgrading relative grant command from a non-serving link;
   **characterized by**
   means (101) configured to prevent, in a situation in which no scheduled transmission took place by the apparatus during an immediately preceding transmission period, the detected command from causing the apparatus to start applying a lowest value of a parameter that controls the transmission power or power ratio for scheduled transmission.

7. The apparatus of claim 6, wherein the apparatus is configured to perform said preventing if a relative grant command DOWN is detected at the apparatus and no scheduled transmission took place on a transmission, HARQ, process in a previous transmission time interval, reference_ETPR equals Minimum_Grant, or during any of the active transmission, HARQ) processes in a preceding time window, maximum of all active reference_ETPR2 equals Minimum_Grant.

8. The apparatus of claim 7, wherein the apparatus is configured to perform said preventing by preventing Serving_Grant from being set to Minimum_Grant.

9. The apparatus of claim 6, wherein the relative grant command is a transmission power downgrading command or data rate downgrading command, or a command to maintain current data rate or transmission power.

10. The apparatus of claim 6, wherein the relative grant command is a HOLD or DOWN command on a relative grant channel, E-RGCH or similar.

11. The apparatus of claim 6, wherein the apparatus is configured to continue using a current value of said variable or parameter.

12. The apparatus of claim 6, wherein the scheduled transmission is a transmission occurring on an uplink transport channel.

13. The apparatus of claim 6, wherein the transmission power downgrading command is a detected relative grant command requiring a power change in relation to scheduled data transmitted during a preceding transmission period.

14. The apparatus of claim 6, wherein the apparatus is a mobile terminal (100).

15. A computer program configured to cause a method according to at least one of claims 1 - 5 to be performed.


**Patentansprüche**

1. Ein Verfahren, umfassend:

Kommunizieren (201) über eine Vorrichtung mit Basisstationen unter Verwendung einer Hochgeschwindigkeits-Uplink-Paketübermittlungstechnik, die für die Vorrichtung dienende und nicht-dienende Verbindungen zu Basisstationen sowie planmäßige Übermittlungen über eine dienende Verbindung bereitstellt;
Entdecken (202) eines Herabstufung bezüglichen Gewährungsbefehls von der Vorrichtung von einer nicht-dienenden Verbindung; und
**dadurch gekennzeichnet, dass**
in einer Situation, in der keine planmäßige Übermittlung durch die Vorrichtung während einer unmittelbar vorangegangenen Übermittlungsperiode stattgefunden hat, das Verfahren umfasst
Verhindern (203), dass der entdeckte Befehl verursacht, dass die Vorrichtung beginnt, den niedrigsten Wert eines Parameters, der die Übermittlungsleistung oder Leistungsverhältnis für planmäßige Übermittlung steuert, anzuwenden.

2. Das Verfahren nach Anspruch 1, wobei das Verhindern (203) ausgeführt wird, wenn ein bezüglicher Gewährungsbefehl DOWN von der Vorrichtung entdeckt wird und während eines HARQ Übermittlungsprozesses in einem früheren Übermittlungs-Zeitintervall keine planmäßige Übermittlung stattgefunden hat, Referenz_ETPR gleich Minimum_Gewährung, oder während einer der aktiven HARQ Übermittlungsprozesse in einem vorangegangenen Zeitfenster, Maximum aller aktiven Referenz_ETPR2 gleich Minimum_Gewährung.

3. Das Verfahren nach Anspruch 2, wobei das Verhindern (203) ausgeführt wird durch Verhindern, dass Dienend_Gewährung auf Minimum_Gewährung gesetzt wird.

4. Das Verfahren nach Anspruch 1, wobei das Verhindern (203) in einer Situation ausgeführt wird, in der während eines der aktiven HARQ Übermittlungsprozesse in einem vorangegangenen Zeitfenster keine planmäßige Übermittlung von der Vorrichtung stattgefunden hat.

5. Das Verfahren nach Anspruch 1, wobei der bezügliche Gewährungsbefehl ein Übermittlungsleistung-Herabstufungs-Befehl oder Datenrate-Herabstufungs-Befehl, oder ein Befehl zur Aufrechterhaltung einer gegenwärtigen Datenrate oder Übermittlungsleistung ist.

6. Eine Vorrichtung umfassend:

Mittel (106) konfiguriert, um mit Basisstationen unter Verwendung einer Hochgeschwindigkeits-Uplink-Paketübermittlungstechnik, die für die Vorrichtung dienende und nicht-dienende Verbindungen zu Basisstationen sowie planmäßige Übermittlungen über eine dienende Verbindung bereitstellt, zu kommunizieren, die Mittel weiterhin konfiguriert, um einen Herabstufung bezüglichen Gewährungsbefehl von einer nicht-dienenden Verbindung zu entdecken;
**dadurch gekennzeichnet, dass**
Mittel (101) konfiguriert, um, in einer Situation, in der keine planmäßige Übermittlung durch die Vorrichtung während einer unmittelbar vorangegangenen Übermittlungsperiode stattgefunden hat, zu verhindern, dass der entdeckte Befehl verursacht, dass die Vorrichtung beginnt, den niedrigsten Wert eines Parameters, der die Übermittlungsleistung oder Leistungsverhältnis für planmäßige Übermittlung steuert, anzuwenden.

7. Die Vorrichtung nach Anspruch 6, wobei die Vorrichtung konfiguriert ist, das Verhindern auszuführen, wenn ein bezüglicher Gewährungsbefehl DOWN von der Vorrichtung entdeckt wird und während eines HARQ Übermittlungsprozesses in einem früheren Übermittlungs-Zeitintervall keine planmäßige Übermittlung stattgefunden hat, Referenz_ETPR gleich Minimum_Gewährung, oder während einer der aktiven HARQ Übermittlungsprozesse in einem vorangegangenen Zeitfenster, Maximum aller aktiven Referenz_ETPR2 gleich Minimum_Gewährung.

8. Die Vorrichtung nach Anspruch 7, wobei die Vorrichtung konfiguriert ist, das Verhindern, durch Verhindern, dass Dienend_ Gewährung auf Minimum_Gewährung gesetzt wird, auszuführen.

9. Die Vorrichtung nach Anspruch 6, wobei der bezügliche Gewährungsbefehl ein Übermittlungsleistung-Herabstufungs-Befehl oder Datenrate-Herabstufungs-Befehl, oder ein Befehl zur Aufrechterhaltung einer gegenwärtigen Datenrate oder Übermittlungsleistung ist.

10. Die Vorrichtung nach Anspruch 6, wobei der bezügliche Gewährungsbefehl ein HOLD- oder DOWN-Befehl auf einem bezüglichen Gewährungskanal, E-RGCH oder Ähnlichem ist.

11. Die Vorrichtung nach Anspruch 6, wobei die Vorrichtung konfiguriert ist, weiterhin einen gegenwärtigen Wert der Variablen oder Parameter zu verwenden.

12. Die Vorrichtung nach Anspruch 6, wobei die planmäßige Übermittlung eine Übermittlung ist, die auf einem Uplink-Transportkanal stattfindet.

13. Die Vorrichtung nach Anspruch 6, wobei der Übermittlungsleistung-Herabstufungs-Befehl ein entdeckter bezüglicher Gewährungsbefehl ist, der einen Leistungswechsel in Bezug auf planmäßige Datenübermittlung während einer vorangegangenen Übermittlungsperiode anfordert.

14. Die Vorrichtung nach Anspruch 6, wobei die Vorrichtung ein mobiles Endgerät (100) ist.

15. Ein Computerprogramm konfiguriert, um zu veranlassen, dass ein Verfahren nach zumindest einem der Ansprüche 1-5 ausgeführt wird.

**Revendications**

1. Procédé comprenant les étapes consistant à :

communiquer (201) par un appareil avec des stations de base en utilisant une technique de transmission par paquets en liaison montante à grand débit qui fournit à l'appareil des liaisons de desserte et de non-desserte avec des stations de base ainsi que des transmissions programmées dans une liaison de desserte ;
détecter (202) une instruction d'accord relatif de
déclassement dans l'appareil sur une liaison de non-desserte ; et
**caractérisé en ce que** :

dans une situation dans laquelle aucune transmission
programmée n'a eu lieu par l'appareil au cours d'une période de transmission immédiatement précédente,
le procédé comprend l'étape consistant à empêcher (203) l'instruction détectée d'amener l'appareil à commencer à appliquer une valeur très basse d'un paramètre qui commande le pouvoir de transmission ou le taux de puissance pour la transmission programmée.

2. Procédé selon la revendication 1, dans lequel ladite prévention (203) est effectuée si une instruction d'accord relatif BAS est détectée dans l'appareil et qu'aucune transmission programmée n'a eu lieu dans un processus de transmission HARQ dans un intervalle de temps de transmission antérieur, l'ETPR de référence est égal à l'accord minimal ou, au cours de l'un quelconque des procédés de transmission active HARQ dans une fenêtre temporelle précédente, le maximum de tous les ETPR2 de référence actifs est égal à l'accord minimal.

3. Procédé selon la revendication 2, dans lequel ladite prévention (203) est effectuée en empêchant l'accord de desserte de se régler sur l'accord minimal.

4. Procédé selon la revendication 1, dans lequel ladite prévention (203) est effectuée dans une situation dans laquelle aucune transmission programmée n'a eu lieu par l'appareil au cours de l'un quelconque des procédés de transmission active HARQ dans une fenêtre temporelle précédente.

5. Procédé selon la revendication 1, dans lequel l'instruction d'accord relatif est une instruction de déclassement de pouvoir de transmission ou une instruction de déclassement de débit de données ou encore une instruction pour maintenir le débit de données courant ou le pouvoir de transmission courant.

6. Appareil comprenant :

des moyens (106) configurés pour communiquer avec des
stations de base en utilisant une technique de transmission par paquets en liaison montante à haut débit qui fournit à l'appareil des liaisons de desserte et de non-desserte avec les stations de base ainsi que des transmissions programmées dans une liaison de desserte, les moyens étant en outre configurés pour détecter une instruction d'accord relatif de déclassement dans une liaison de non-desserte ;
**caractérisé par** :

des moyens (101) configurés pour empêcher, dans une
situation où aucune transmission programmée n'a eu lieu par l'appareil au cours d'une période de transmission immédiatement précédente, l'instruction détectée d'amener l'appareil à commencer à appliquer une valeur très basse d'un paramètre qui commande le pouvoir de transmission ou le taux de puissance pour la transmission programmée.

7. Appareil selon la revendication 6, dans lequel l'appareil est configuré pour effectuer ladite prévention si une instruction d'accord relatif BAS est détectée dans l'appareil et qu'aucune transmission programmée n'a eu lieu dans un processus de transmission HARQ dans un intervalle de temps de transmission antérieur, l'ETPR de référence est égal à l'accord minimal ou, au cours de l'un quelconque des procédés de transmission active HARQ dans une fenêtre temporelle précédente, le maximum de tous les ETPR2 de référence actifs est égal à l'accord minimal.

8. Appareil selon la revendication 7, dans lequel l'appareil est configuré pour effectuer ladite prévention en empêchant l'accord de desserte de se régler sur l'accord minimal.

9. Appareil selon la revendication 6, dans lequel l'instruction d'accord relatif est une instruction de déclassement de pouvoir de transmission ou une instruction de déclassement de débit de données ou encore une instruction pour maintenir le débit de données courant ou le pouvoir de transmission courant.

10. Appareil selon la revendication 6, dans lequel l'instruction d'accord relatif est une instruction MAINTIEN ou BAS sur un canal d'accord relatif E-RGCH ou similaire.

**11.** Appareil selon la revendication 6, dans lequel l'appareil est configuré pour continuer à utiliser une valeur courante de ladite variable ou dudit paramètre.

**12.** Appareil selon la revendication 6, dans lequel la transmission programmée est une transmission qui s'établit sur un canal de transport en liaison montante.

**13.** Appareil selon la revendication 6, dans lequel l'instruction de déclassement du pouvoir de transmission est une instruction d'accord relatif détectée nécessitant un changement de puissance en rapport avec les données programmées transmises au cours d'une période de transmission précédente.

**14.** Appareil selon la revendication 6, dans lequel l'appareil est un terminal mobile (100).

**15.** Programme informatique configuré pour susciter la réalisation d'un procédé selon l'une quelconque des revendications 1 à 5.

Fig. 1

Fig. 3

201 — Communicating with base stations using high speed uplink packet transmission

202 — Detecting transmission power downgrading command from a non-serving link

203 — If no scheduled transmission during preceding transmission period, preventing setting SG to lowest value

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101060656 A
- WO 2006081874 A
- US 2007248099 A